# EUROPEAN PATENT SPECIFICATION

(11) **EP 1 633 156 B1**
(45) Date of publication and mention of the grant of the patent: **10.04.2019**
(21) Application number: 05018208.8
(22) Date of filing: 22.08.2005
(51) Int. Cl.: H04L 29/06, H04W 12/06

(54) **System and method for device identity check**
System und Verfahren zur Identitätsprüfung eines Geräts
Système et procédé pour la vérification d' identité d'un appareil

(30) Priority: 30.11.2004 SE 0402931; 31.08.2004 SE 0402105
(43) Date of publication of application: 08.03.2006
(73) Proprietor: Giesecke+Devrient Mobile Security GmbH, 81677 München (DE)
(72) Inventor: Svensson, Britt-Mari, 192 74 Sollentuna (SE)

(56) References cited:
- EP-A- 0 684 743
- WO-A-00/67501
- US-A1- 2004 032 880
- US-B1- 6 223 028

## Description

### TECHNICAL FIELD

The invention is concerned with a system and method for checking the identity of devices in a device management system in a mobile telecommunication network, the system comprising devices to be managed, a server side device management application, a client side device management application and databases, and an interface between said device management applications,

### BACKGROUND

GSM, together with other technologies, is part of an evolution of wireless mobile telecommunication. The Global System for Mobile Communication (GSM) is a standard for digital wireless communications with different services, such as voice telephony. The Subscriber Identity Module (SIM) inside GSM phones was originally designed as a secure way to connect individual subscribers to the network but is nowadays becoming a standardized and secure application platform for GSM and next generation networks.

The Mobile Station (MS) represents the only equipment the GSM user ever sees from the whole system. It actually consists of two distinct entities. The actual hardware is the Mobile Equipment (ME), which consists of the physical equipment, such as the radio transceiver, display and digital signal processors. The subscriber information is stored in the Subscriber Identity Module (SIM), implemented as a Smart Card.

With respect to the terminology used in this document, The Mobile Station (MS) includes the Mobile Equipment (ME) and the Subscriber Identity Module (SIM). The term "Handset" is used as a synonym to the Mobile Equipment (ME) and the term "Device" as a synonym to The Mobile Station (MS).

The mobile equipment is uniquely identified by the International Mobile Equipment Identity (IMEI) being a unique code that corresponds to a specific GSM handset while the SIM card, in turn, is identified by the Integrated Circuit Card Identity (ICCID) determining the serial number of the card, and contains the International Mobile Subscriber Identity (IMSI), identifying the subscriber, a secret key for authentication, and other user information. The IMEI and the IMSI or MSISDN are independent and can thereby provide personal mobility.

The Mobile Station Integrated Service Digital Network Number, MSISDN, is the standard international telephone number used to identify a given subscriber. The operator declares the subscription in a database inside the network, which holds the correspondence between the IMSI and the MSISDN. By inserting the SIM card into another GSM terminal, the user is able to receive and make calls from that terminal, and receive other subscribed services.

Advanced mobile services such as browsing, multimedia messaging, mobile e-mail, and device management can only be used if a mobile phone is configured correctly. However, many customers do not know how to configure their device. Operators must ensure that device configuration is quick and easy for the customer. This process of managing device settings and applications is called device management.

A device management session includes e.g. authentication (user verification), device inventory (a device management application reading parameters and applications installed in the telephone for future decisions, e.g. updating, adding and deleting things from the installations), continuous provisioning (a device management application e.g. updates parameters on the telephone device, sends applications to the device, performs software and firmware updates), device diagnostics (error finding), etc.

Sending new settings over the air is one simple way to provision a device with configuration parameters, such as connectivity information (device settings). After receiving the settings to configure the phone, the customer simply saves them to the phone and is then able to use the services. For the operator, simplifying access to advanced services can bring higher usage rates, new revenue streams, and reduced customer helpline costs.

When a mobile terminal attaches to the network, it sends a signal to the network containing both IMSI end IMEI information. The Swedish patent applications 0302626-7 and 0303210-9 of the applicant present improved solutions for introducing a new terminal or SIM to the network.

As a result of technological development, networked and mobile/wireless devices are becoming more and more complex, and consequently, connected devices are also becoming more and more difficult to manage. Consumers and operators therefore need a tool for managing devices conveniently and effectively.

Device management is the generic term used for technology that allows third parties to carry out the difficult procedures of configuring mobile devices on behalf of the end users. There are numerous cases, wherein device management is needed such as new device purchase, remote service management, software download, changing and adding services, and service discovery and provisioning etc.

SyncML Device Management (SyncML DM) enables management of devices and applications, simplifying configuration, updates and support. Sponsored and supported by leading wireless companies, the SyncML initiative accelerates the development and market success of SyncML DS and SyncML DM technologies.

SyncML Device Management Protocol (SyncML DM) is thus a standard for communication between devices and device management server systems. The standardization body is OMA, Open Mobile Alliance. The device to be managed is equipped with a SyncML user agent in the device (i.e. terminal or handset) that speaks the SyncML DM language.

Device management applications are typically used by mobile service providers. They are used for customer care purposes and to increase revenue by effective value added service management. Example use-cases involve service- and settings provisioning, device diagnostics, statistics, firmware upgrade and software upgrade.

As the mobile device often consists of two entities - the Subscriber Identity Module (SIM) and the terminal equipment - both entities that make up the "device" are of interest. Both those entities should be subjects of device management operations. A mobile service provider that wishes to do device management over e.g. SyncML DM is in fact using both handset residing and SIM residing content. That means, both equipment and subscription information are taken into account.

In this document, a system that is concerned with both the handset and the SIM card is referred to as a Unified Device Management system (UDM).

For this purpose, the device management application thus has to be aware of certain information of the devices that are supposed to be managed. The device management application has to be informed of the identity, address or phone number of the device, which information has been received in some way.

Usually, the device management application just has waited until a subscriber has decided to initiate a session and do self-management. The Swedish patent application 0401242-3 of the applicant presents improved solutions for device discovery.

Assuming a subscription centric device management environment, devices to be managed are kept track of by a subscription identity, like the IMSI, MSISDN or ICCID. A mobile service provider bases everything, like charging of the subscriber, on the subscription identity. A subscription identity is represented by a destination address where OTA addressing is concerned.

Seen from the subscription centric point-of-view, a subscription (i.e. the destination address) operates in a handset (equipment), which may change. In a subscription centric environment, the device management application might not know the relevant handset type used, and would need to retrieve that information from somewhere.

Assuming a handset centric device management environment, in turn, devices to be managed are kept track of by the identity of the individual handset equipment. This seems the natural thing to do, when considering all settings and applications that reside in an individual handset.

Seen from the handset centric point-of-view, it is the handset that suddenly can not be reached any longer, when an end user decides to switch to another subscription. A very probable situation is an end-user with one corporate- and one private subscription, which might use even different mobile service providers.

Problems arise when the subscriber changes to another handset or another subscription even if a device or subscription might have been known at subscription- and/or handset point-of-sale. Then the device management application can be left with an inaccurate combination of handset identity and subscription identity, such as the destination address as in a Unified Device Management (UDM) environment a "device" consists of two entities and does actually exist only in real-time.

This fact imposes said problems for both UDM and DM device management applications managing only handsets and not the SIM. In a handset centric environment, the mobile service provider cannot know the destination address for sure. He can only know what the destination address was at the last session. That implies that all server initiated management sessions are successful only by chance.

The SyncML DM device management application in turn cannot access a handset without the correct destination address. SyncML DM device management applications can either not perform a check of the UDM device identity, since it cannot speak SIM file management protocols.

In an UDM environment, the device identity of devices is a composite identity consisting of both handset identifier and subscription identifier. The composite identity is referred to as the UDM Identity in this document forward.

If an end-user might has altered the combination since the last device management session took place, the UDM application would have an inaccurate UDM device identity. Hence the targeted handset can not be reach via this subscription. The targeted subscriber (subscription) is no longer using the same handset.

One solution for the device management application to be up to date with the current situation is to perform continuous device discovery in accordance with said Swedish patent application 0401242-3 of the applicant, which presents improved solutions for device discovery.

Another issue to be taken into consideration is that the device identity is dynamic, by which is meant, that a device identity in fact only exist in real-time. A device identity only exists in the mobile network when a terminal is operated (switched on) by an active subscription. When it is switched off, it can not be reached over-the-air. Conceptually it does not exist just then. It is conceptually defined as "offline". When the device is switched on again, and the status changes from "offline" to "online". The device is "online" in the mobile network.

To understand this concept, also consider a situation where an end-user swtiches between two handsets, moving the subscription back and forth. Such an end-user is using one subscription and two handsets, thus using two different devices.

Thus, in a unified device management environment a "device" consists of two entities, which actually exist only in real-time. This reality imposes problems for device management applications. Some of the difficulties are discussed below. They may be sorted into categories:
1. Problems with devices that are "offline" i.e. not possible to reach OTA
2. Problems with unknown status
3. Problems associated with not knowing when a device will be "online" next time

It is a problem for device management applications when mobile devices are unreachable. For example, they might attempt to send SMs repeatedly to the phone number, even if the device is in silent status, jamming up SMS-Cs and application services quite unnecessarily. DM applications have no idea of when it could possibly get a chance to complete its management tasks towards an unavailable device

The main problem of course being that the device cannot be managed. To address the situation, a device management application is eager to carry out the device management operations towards the device as soon as it gets online again.

WO00/67501, US patent 6,223,028, US patent application 2004/032880 and EP patent application 0684743 are presented as prior art. In WO00/67501 and US 6,223,028, properties of a wireless communication device are stored for the purpose of using services. US 2004/032880 sends the right protocols to a mobile device for using a service upon request and EP patent application 0684743 s a particular device managemen operation (use-case), wherein a device identity is retrieved, upon which it is decided whether to send new version of software.

### OBJECT OF THE INVENTION

The object of the invention is to find new solutions to face the problem with altered UDM device identities.

A second object is to find new solutions to face the problems with reaching device that are offline.

### SUMMARY OF THE INVENTION

The method of the invention for checking the identity of devices is implemented in a device management system in a mobile telecommunication network. The system comprises devices to be managed, a server side device management application, a client side device management application, a database, and an interface between said device management applications. The method is mainly characterized in that a device management session is initiated via said interface, before or after which said client side device management application reads equipment information, and sends it to the interface. The interface compares the equipment information sent with previously stored equipment information for the subscription from which the equipment information was sent by means of subscription information for said subscription and reporting said comparison result to the server side device management application.

The system of the invention comprises a component on the client side for reading the equipment identity, an interface for checking identity of devices from a device identity repository, and a database implementing a device identity repository.

Preferable embodiments of the invention are presented in the subclaims.

In this document, a system that is concerned with both the handset and the SIM card is referred to as a Unified Device Management system (UDM).

The handset identifier and the subscription identifier can each be defined by several parameters. E.g. in the GSM environment, relevant as subscription identifiers are the subscription identity, the destination address, and/or the SIM card identity [IMSI, MSIDN, ICCID]. In this document the term "Subscription identifier" represents schematically all varieties of parameters for a subscription. The equipment identifier is defined by the IMEI. Consequently, the UDM Identity is a composite device identity that consists of both the handset identifier and some variety of the subscription identifier. Therefore, in the UDM environment, the device identity only exists momentarily.

The invention includes a mechanism to perform a check of the UDM Device Identity. This is preferably achieved by an innovative merging of SIM file management technology and SyncML DM technology in the UDM environment. The UDM Device Identity Check makes sure that a device management application can operate efficiently with accurate (almost) real-time valid device identities.

Thus, the invention makes use of the fact that the device can be identified (and addressed) by the UDM device identity as described above. An end-user might have altered the combination since the last device management session took place. That would leave the UDM application with an inaccurate UDM device identity. Hence the targeted handset could not be reach via this subscription. The targeted subscriber (subscription) is no longer using the same handset. The invention successfully solves this problem by performing a *UDM Device Identity Check* before a device management session proceeds.

The solution of the invention is advantageously implemented by a device management application on the SIM card and a server side part implementing the communication and checking functions.

The checking of the UDM device identity is done via an on-SIM device management application, for example a browser application. The browser application takes care of reading the handset identity and returning of the value. Thus the checking is performed in real-time over-the-air. For example if the subscription is not active in the network at the moment, it would be revealed at the check.

An advantage of the invention is that it can be performed in a multi-subscription environment. A scenario with multi-subscription handsets and generally handsets with two or more SIMs and subscriptions needs a variety of UDM identities. In such a scenario the invention can fill the arising need for a check of real-time device identities.

Some embodiments of the invention covers a method to check the device identity in real-time, find out whether the device is online in the mobile network or not, and finally to determine whether there has been a change in status since the last check. If there has been a status check, the delta, i.e. time since last recorded status change, is determined. The delta is a piece of information vital to several device management application use-cases. The system of this embodiment enables device management applications to build application logic around the delta value. The status change monitoring feature is a natural extension of device discovery features. Or vice versa - device discovery can be seen as a special case of device status monitoring.

The status change monitoring is achieved by the use of
- The same device management application running on-SIM as in the general embodiments of the invention
- A repository with dynamic device identities and associated status information recorded, referred to as the UDM database in this document forward.
- The same device management application program that communicates with the device management application on the SIM card, and performs application logic and communicated with the UDM database to lookup and store e.g. device identities and statuses and possibly further information.

The status change monitoring feature is possible to operate in an automatic scenario, as well as in an "assisted" scenario. The function of the SIM application would be slightly different, depending on operation scenario.

Both modes of operation are included in this invention description- both a device triggered automatic operation scenario and a DM application triggered assisted operation scenario.

In the assisted operation scenario, the logic is based on an external device management application, which queries the UDM interface for status information about a particular device. On the SIM card, a device management application is running that reads the IMEI off the phone, and thereby reveals whether the device is accessible, not accessible and what IMEI the handset has.

In the automatic operation scenario, the logic is based on that the Device management application on the SIM card is triggered to run automatically at every phone power-on.

In the assisted operation scenario the UDM interface does the following:
- Checks if the device is online by sending a query to the device. The query is destined for and processed by the SIM application in the device.
- Checks and records the device status in the UDM database
- Determines whether there has been a device status change, and if so calculates the time since the last recorded status change
- In addition, the case might be that the device queried does not exist at this point in time, instead another device is found to be online using the MSISDN in question. In such a case that device is recorded as online in the UDM database.

The DM application on the SIM card reads the IMEI off the phone and sends it back to the UDM interface.

The UDM check application program processes the composite device information (i.e. the MSISDN + IMEI pair) with the help of the UDM database and determines device status. Thus the checking is performed in real-time over-the-air. For example if the subscription is not active in the network at the moment, that would be revealed. It would also of course be revealed if the device is online, or if the subscription is actually operating in another handset (meaning another device is found to be online, than the one queried for)

When this UDM check function (having the status function) is operated in an automatic operation scenario, *the IMEI query is* equipped with event driven triggering mechanism that makes it run automatically at every phone power-on. The DM application would passively be waiting for notifications from the UDM check for news about device status changes in the environment.

This feature would work automatically, performing checks and record updates against the UDM database. As an additional step, a check is made whether a status change delta-value has exceeded a configured trigger value. If it has, a notification is sent to an external DM application.

If it is found that the device status has changed, and a configured time span (delta-value) has elapsed since the device was last in the opposite status, a notification can be sent to a DM application that is interested to be notified of such events.

Further advantages can be reached with the advantageous embodiments of the invention having the status check function, in which in addition to keeping track of dynamic device identities also the status of the devices to be managed can be monitored, meaning that the invention provides means for knowing whether a device to be managed is "online" or offline", i.e. whether a particular subscription is inserted in a particular handset that is switched on so that it can receive device management messages over an OTA transport such as e.g. GSM SMS.

As the method and system of the invention is implemented some additional functions naturally adds on and increase the feature scope further. In a mobile device management system it is central to know whether a device is reachable or not. If a device is unreachable, it is of significant benefit to have means in the system that can indicate when a device status changes from "offline" to "online".

Monitoring mobile device status change can be used to trigger device management actions. The invented system would be generally interesting for all device management system where server initiated use-cases are valid, and significantly interesting in subscription centric environments.

E.g. batch provisioning applications want to provision device with settings or applications as soon as it gets "online". For example, new settings for application services are waiting, or new games that the end-user subscribes to.

In a subscription centric DM environment it is of great benefit for the DM application to gain knowledge of the handset switch. Instead of attempting to manage device D1, it should instead be managing device D2. The other handset might have completely different capabilities than the first. The mobile service provider may for example like to offer new services, or maybe have changed some service settings since the last time this device was online.

If a device is online again, after having been offline for a month, then the DM application might want to take some actions. For example a bunch of device management operations is awaiting this device as soon as it gets online. A DM application might be attempting to inventory this device, but it is not available. Instead of trying and trying over and over again, the system can be ensured with this status change monitoring feature.

In the following, the invention is described by means of some advantageous embodiments by referring to the figures. The intention is not to restrict the invention to the details of the following description. Thus, the device management application on the SIM card (or e.g. on an USIM card) can be of optional kind, such as e.g. a wireless browser application, the signaling can be implemented in an other environment than the GSM and use a bearer independent protocol.

### FIGURES

Figure 1 is a view of a prior art target environment without the invention
Figure 2 is a view of an environment that includes the entities that implements the method of the invention
Figure 3 is an example signal diagram of a first embodiment of the method of the invention
Figure 4 is an example signal diagram of a second embodiment of the method of the invention
Figure 5 is an example signal diagram of a third embodiment of the method of the invention
Figures 6 - 9 presents different example scenarios of different embodiments of the invention

### DETAILED DESCRIPTION

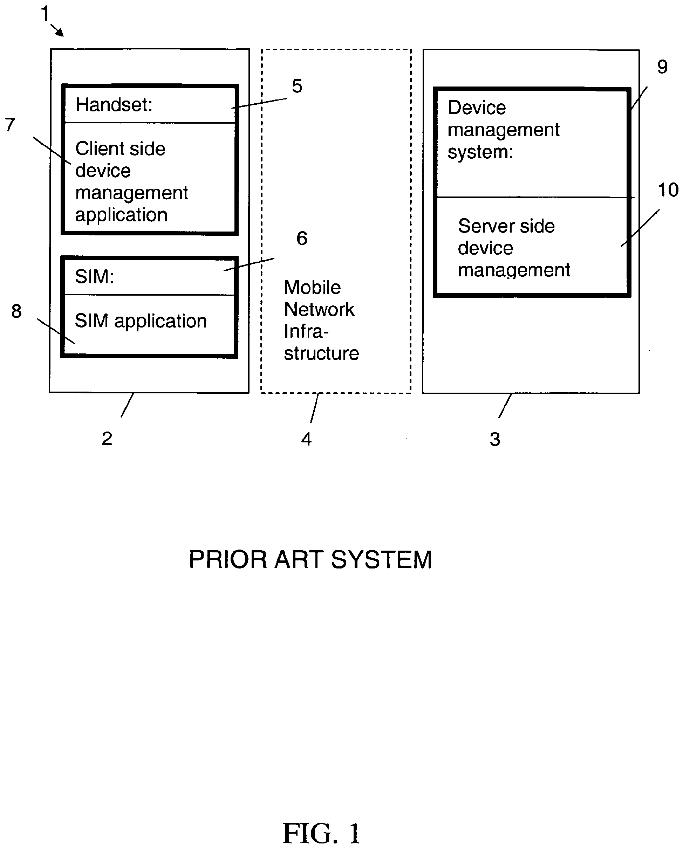

Figure 1 is a view of a prior art target environment without the invention. The target environment is presented as an example of a telecommunication network 1 in which the invention can be used. The telecommunication network 1 comprises one or more devices to be managed, of which one device 2 and a device management server 3 can be seen in figure 1. The device 2 to be managed is in this example a mobile device 2 belonging to the mobile network infrastructure 4.

The Mobile Station (MS) (= the device) represents the only equipment the GSM user ever sees from the whole system. It actually consists of two distinct entities. The actual hardware is the Mobile Equipment (ME) (=handset) marked with reference number 5 in figure 1, which consists of the physical equipment, such as the radio transceiver, display and digital signal processors. The subscription information is stored in the Subscriber Identity Module (SIM), marked with reference number 6 in figure 1, implemented as a Smart Card.

In this context, mobile network infrastructure includes all components and functions needed for mobile data communication, both GSM and internet included. The mobile device, in turn, includes both the handset 5 and the SIM card 6. Thus, the mobile device 2 has access to the mobile network infrastructure 4.

SyncML Device Management Protocol (SyncML DM) is one standard for communication between devices and applications in device management systems. If this standard is used, the device to be managed, i.e. the mobile station 2 in figure 1, is equipped with a SyncML user agent 7 in the device 2 that speaks the SyncML DM language. With other device management protocols, user agent 7 is a user client for the particular device management application used in the device management system 9.

Thus, the device management system 9 has a server side device management application 10 using a device management protocol, which e.g. can be SyncML DM, which is typically used by mobile service providers. They are used for customer care purposes and to increase revenue by effective value added service management. Example use-cases involve service- and settings provisioning, device diagnostics, statistics, firmware upgrade and software upgrade.

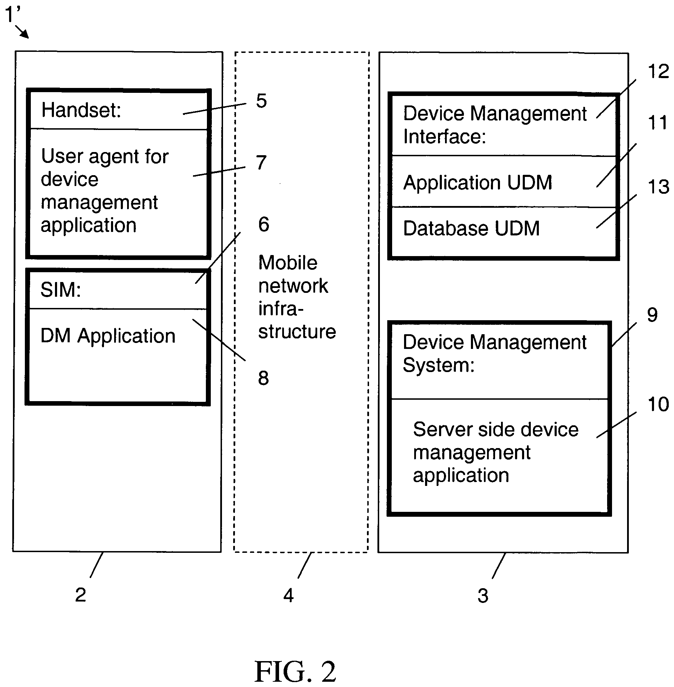

Figure 2 is a view of an environment that includes the entities that implements the method of the invention in addition to those presented in figure 1. The system 1' in figure 2 comprises components residing on both the mobile device 2 in figure 2 and on the server side 3 in figure 2.

A Device Management Application program (DMA), having reference number 8 in figure 2 and running on SIM, checks in what handset the SIM resides by reading the IMEI value from the handset. It resides as an application program on the SIM card 6 in the device 2 by transmitting information about handset changes to a server side component over the mobile network. This server side component is a Unified Device Management (UDM) check application 11 in the Unified Device Management Interface 12 on the server side 3. The DMA 8 and the UDM 11 communicate over the mobile network (GSM) 4.

The system 1' in figure 2 comprises components residing on both the mobile device 2 in figure 2 and on the server side 3 in figure 2. In reality, the server side consists of several servers, one for the server side device management application and one for the DM system interface.

The UDM database has the reference number 13 in figure 2. It contains lists of composite device identities, which means that the UDM Identity consists of both the handset identifier and some variety of the subscription identifier. The handset identifier and the subscription identifier can each be defined by several parameters. E.g. in the GSM environment, relevant as subscription identifiers are the subscription identity, the destination address, and/or the SIM card identity [IMSI, MSIDN, ICCID]. These identities were explained in the background part. In this document the term "Subscription identifier" represents schematically all varieties of parameters for a subscription. The equipment identifier is defined by the IMEI. If using some other standard than GSM, these identities are something else. E.g. the handset identifier might e.g. be some kind of a serial number or the like, used by the terminal manufacturer.

In some embodiments of the invention, the UDM identities are dynamically recorded in the UDM database meaning that the UDM identities are recorded together with status information. Thus, the UDM database keeps record of known devices in the system and also the device status at last check is recorded in the UDM database along with time/date information.

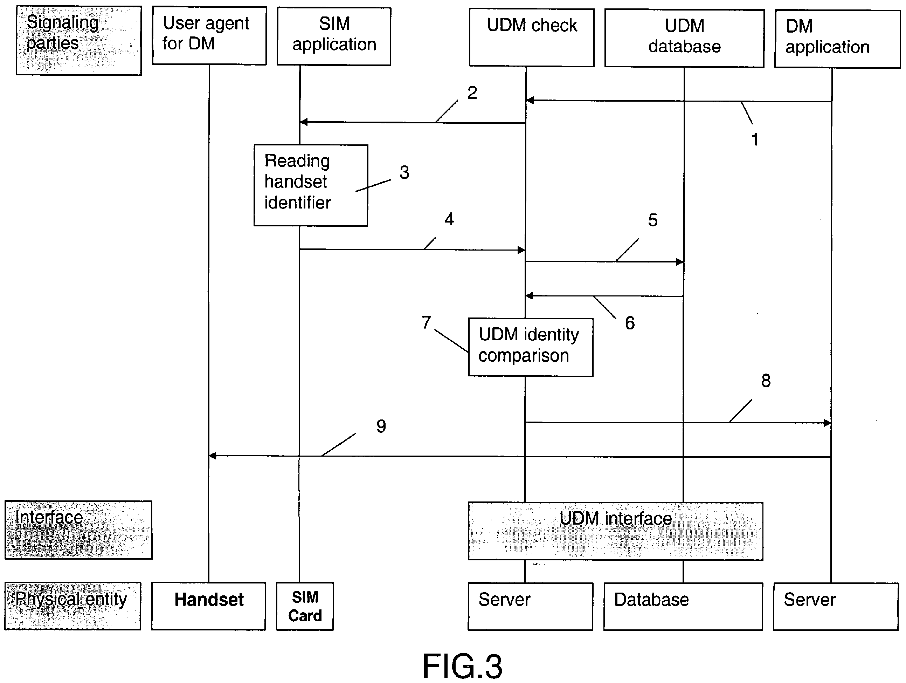

An example of an embodiment of the method of the invention is presented in form of a signal diagram in figure 3.

Figure 3 shows on the lowest row, the physical entities taking part in the method of the invention. These are the handset (equipment) and the SIM card, the servers on the server side, and the UDM database described above. The signaling parties in the system of the invention comprises the client side user agent for DMA (in the handset), a SIM DMA application (in the SIM card), a server side DMA (in the server side Device Management System), a UDM check application and a UDM database (both in the UDM system interface).

It is now assumed that the user of a mobile device has changed his handset but kept his old SIM card and transferred it to the new handset.

When the server side device management application, after that this has happened, initiates a device management session via said interface in signal 1, the UDM check sends a query signal 2 to the SIM application. In step 3, the SIM application reads the handset identity and reports the information in signal 4 back to the UDM check application. The UDM check application performs a comparison to decide if the UDM identity presented in connection with figure 2 above is still valid. This is done by fetching the UDM identity information from the UDM database in signals 5 and 6 and performing, in step 7, a comparison of the previously stored handset identity for the particular subscription identity and the reported handset identity.

If the UDM check application considers on the basis of the comparison of said entities, e.g. IMEI and MSISDN, ICCID and/or IMSI comparison that the device to be managed is a new device, then it has discovered a new device that is now a candidate for device management. Preferably the new device identity is stored in the UDM database right away.

Said comparison result is anyway reported in signal 8 to the server side device management application. Signal 9 shows that the server side DM application now can start a device management session with the intended device.

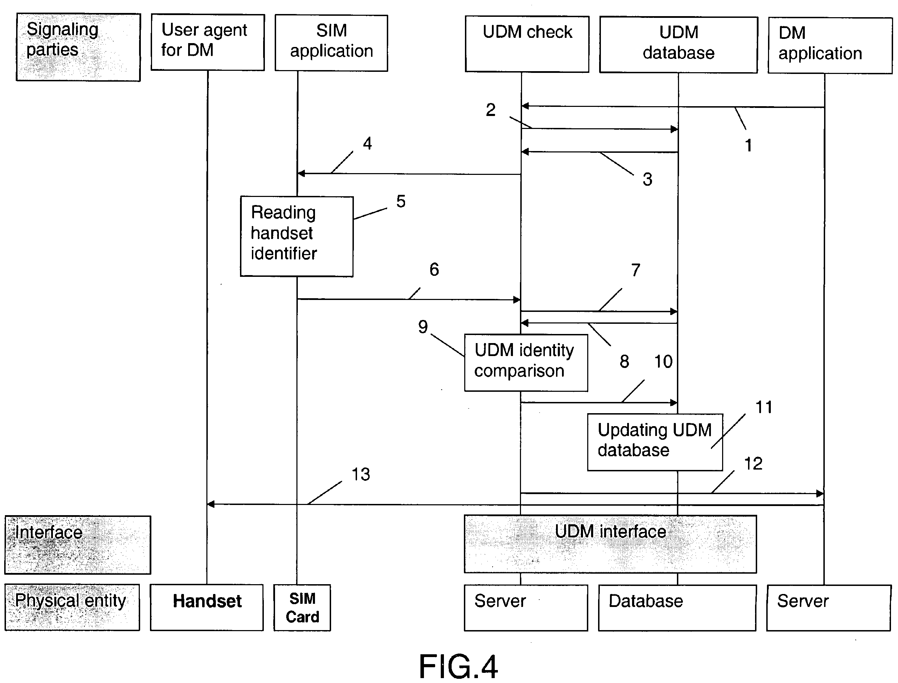

Figure 4 is a signal diagram of a second embodiment of the method of the invention. The physical entities taking part in this embodiment are the same as in figure 3. In addition to querying the UDM identity as in the embodiment of figure 3, also information of the status of the mobile device is received in the DM session in this embodiment, i.e. whether the mobile device is "on-line" or "off-line".

It is now assumed that a device management session is initiated in order to find out the status of a given mobile device. The pre-conditions are that the device exists in the UDM database, its realtime status is online and its device status in the UDM database is offline.

To initiate this device management session, the DM application queries the device status of a device from the UDM check function of the UDM interface in a signal 1 in a corresponding way as in signal 1 of figure 3. The UDM check queries the UDM database if and how the device is recorded in signal 2 of figure 4. In this example, the device is recorded in the UDM database with the status "Offline" and the UDM database informs this in a response to the UDM check with signal 3 of figure 4.

Now the UDM check initiates a real-time OTA query in signal 4 to a SIM application on the device to check if it is online in the mobile network. The device is addressed with the MSISDN. If it would not have been be reached, it would have been assumed to be offline. The query destination is the Device Management Application program referred to in connection with figure 2 and running on the SIM card. The query is carried over the GSM network by making use of the Short message Service SMS with the OTA transport protocol. First the query goes to an SMS-C in the GSM network (not shown), whereafter the query is forwarded to the mobile phone as a SM over the GSM network. The mobile phone forwards the SM to the SIM card and further to said SIM application.

The SIM application then processes the query. It reads the IMEI off the phone in step 5 of figure 4 (in the same way as in step 3 of figure 3) and sends a response back to the UDM check in signal 6. The response is carried over GSM SMS, just as signal 4 was in the opposite direction. The UDM check application now receives the response carrying the IMEI of the device and the information that the subscription now is online. The UDM check application also knows if the IMEI read off the phone in real-time is identical to the IMEI of the device identity in question as it fetches the UDM identity information from the UDM database in signals 7 and 8 (like in signals 5 and 6 of figure 3) and performs a comparison in step 9 (corresponds to step 7 of figure 3) between this previously stored fetched handset identity for the particular subscription entity and the reported handset identity received with said signal 6. In this example they are identical with each other.

The UDM check application has thus also determined on basis of signal 6 that the device is "online". The UDM check application therefore requests updating of the UDM database in signal 10 and the new device status is recorded in step 11.

Preferably, the UDM check calculates the time (referred to as the "delta.value") since the device was first recorded to be in opposite status.

Finally the UDM check application responds with signal 12 to the query of signal 1 from the DM application (corresponds to signal 8 of figure 3) by informing that the device exists in the UDM database, that the device status has been changed from offline to online and by informing the time since last record of opposite status.

Signal 13 (which corresponds to signal 9 of figure 3) intends to show that the server side DM application now can start a device management session with the intended device.

In figure 4, the post-conditions are thus that the device exists in the UDM database, its realtime status is online and its device status in the UDM database is online.

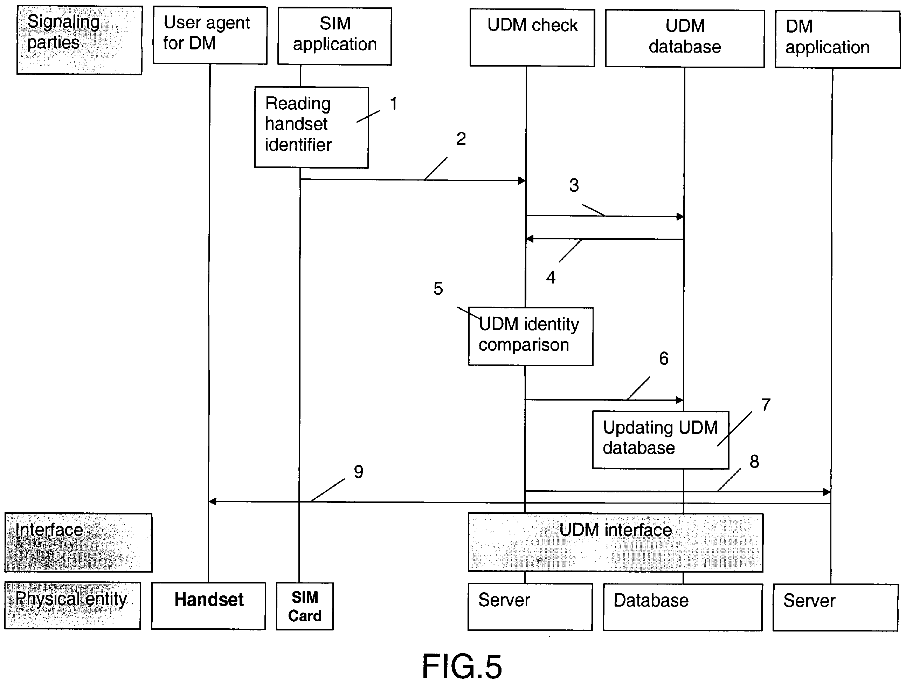

Figure 5 is a signal diagram of a third embodiment of the method of the invention. The physical entities taking part in this embodiment are the same as in figures 3 and 4. As in the embodiment of figure 4, both the UDM identity and information of the status of the mobile device is received in the DM session as a result of the query.

It is now assumed that a device management session is initiated in order to notify the status of a given mobile device. The pre-conditions are that the device exists in the UDM database, its realtime status is online and its device status in the UDM database is offline.

In this embodiment a device triggered automatic scenario takes place in order to initiate a device management session.

An end user switches on a mobile device again after having had it shut some time. The IMEI query performed by the SIM application on the SIM card is automatically triggered to run at phone-power on.

As a consequence of this, the SIM application (The Device Management Application program (DMA) running on SIM) reads the IMEI off the phone in step 1 of figure 5 and sends a notification to the UDM check function. This notification is sent with signal 2 over GSM by making use of the SMS service, i.e. it is sent as a short message from the mobile phone to the UDM check function. It is revealed in this notification that the device is on-line and the UDM device identity is informed, too.

In signal 3, the UDM check queries the UDM database if and how the device is recorded, i.e. which status it has.

In this example, the device is recorded in the UDM database with the status "Offline" and the UDM database informs this in a response to the UDM check with signal 4 of figure 5

In signal 5, the UDM check application also received the information about the IMEI of the device in addition to the information that the subscription now is online. Therefore, the UDM check application also now knows if the IMEI read off the phone in real-time is identical to the IMEI of the device identity in question as in signals 2 and 3 also fetches the UDM identity information from the UDM database (like in signals 7 and 8 of figure 5) and performs a comparison in step 5 (corresponds to step 7 of figure 4) between this previously stored fetched handset identity for the particular subscription entity and the reported handset identity received with said signal 1. In this example they are identical with each other.

The UDM check application has thus also determined on basis of signal 1 that the device is "online". The UDM check application therefore requests updating of the UDM database in signal 6 (like in signal 10 of figure 4) and the new device status is recorded in step 7.

Preferably, the UDM check calculates the time (referred to as the "delta.value") since the device was first recorded to be in opposite status.

Finally the UDM check application responds with signal 8 to the query of signal 1 from the DM application (corresponds to signal 12 of figure 4) by informing that the device exists in the UDM database, that the device status has been changed from offline to online and by informing the time since last record of opposite status.

Thus the post-conditions in the embodiment of figure 5 are that the device exists in the UDM database, its realtime status is online and its device status in the UDM database also is online.

Signal 9 (which corresponds to signal 9 of figure 3) intends to show that the server side DM application now can start a device management session with the intended device.

The above descriptions in connection with the figures have been given as examples only. In reality, the method of the invention (involving checking the device identity and monitoring the online/offline status) depends on the pre-conditions and therefore many different flow-of-event sequences exist. What will happen in each situation depends on whether the device identity checked exists in the UDM database, whether it is online or offline, and whether the online/offline status has changed since last check.

If the device checked is offline, another device may be discovered instead if the case is that the subscription is online but operating on a different handset. In the following, more examples are described in detail.

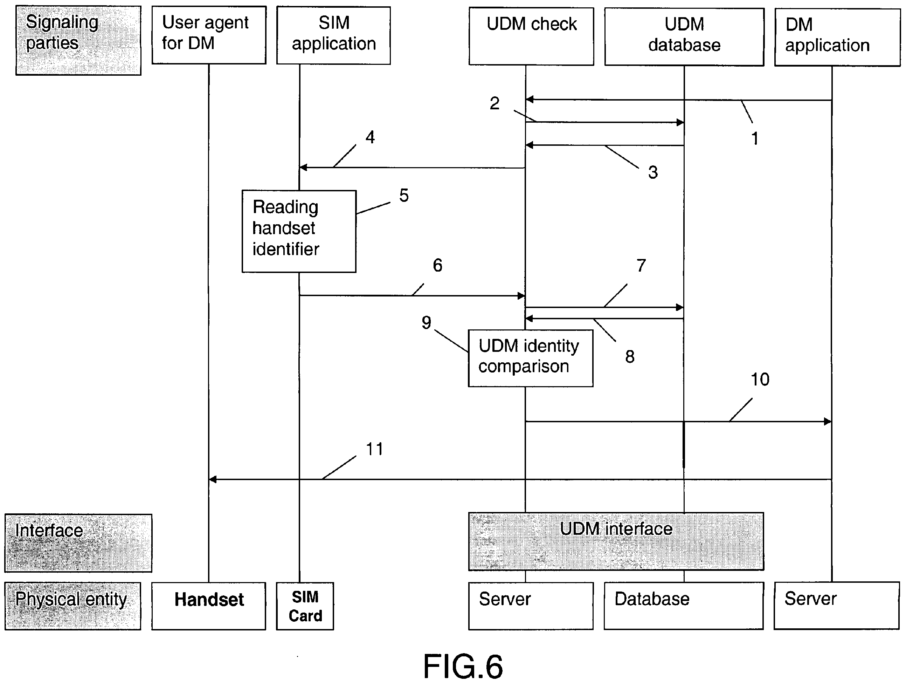

In figure 6, the pre-conditions are that the device exists in the UDM database, its realtime status is online and its device status in the UDM database is online.

In the embodiment of figure 6, steps 1 - 3 are otherwise in accordance with steps 1 - 3 of figure 4, but, the device is recorded in the UDM database with the status "Online" which is reported to the UDM database in a response to the UDM check with signal 3 of figure 6.

Also steps 4 - 9 of figure 6 are the same as steps 4 - 9 in figure 4. However, as the device status has not been change, the UDM database does not have to be updated and the UDM check application can respond with signal 1 to the query of signal 1 from the DM application (corresponds to signal 12 of figure 4) by informing that the device exists in the UDM database, that the device status has not been changed and the device is still online.

Signal 11 (which corresponds to signal 13 of figure 4) intends to show that the server side DM application can start a device management session with the intended device.

In figure 6, the post-conditions are thus the same as the pre-conditions, i.e. the device exists in the UDM database, its realtime status is online and its device status in the UDM database is online.

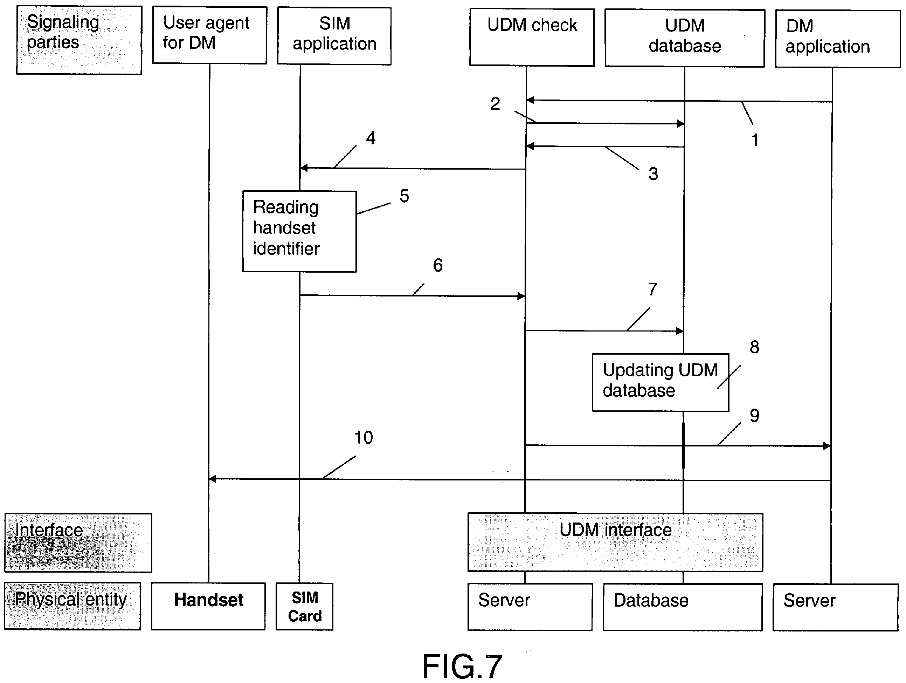

In figure 7, the pre-conditions are that the device does not exist in the UDM database, its realtime status is online and there is no device status in the UDM database.

In the embodiment of figure 7, steps 1 - 3 are otherwise in accordance with steps 1 - 3 of figure 4, but the device is not recorded in the UDM database at all which is reported to the UDM database in a response to the UDM check with signal 3 of figure 7.

Also steps 4 - 6 of figure 7 are the same as steps 4 - 6 in figure 4. However, as the device was not recorded in the UDM database at all, there is no fetching of UDM identity information from the UDM database as was in signals 7 and 8 of figure 4 and no UDM identity comparison as was in step 9 of figure 4.

Instead, as the UDM check application now has determined on basis of signal 6 that the device is "online", it requests updating of the UDM database in signal 7 and the new device status ("online") and also the device identity is recorded in step 8.

The UDM check application then responds with signal 9 to the query of signal 1 from the DM application (corresponds to signal 12 of figure 4) by informing that the device has been added to the UDM database and that the device status is online.

Signal 10 (which corresponds to signal 9 of figure 3) intends to show that the server side DM application now can start a device management session with the intended device.

In figure 7, the post-conditions are thus that the device exists in the UDM database, its realtime status is online and its device status in the UDM database is online.

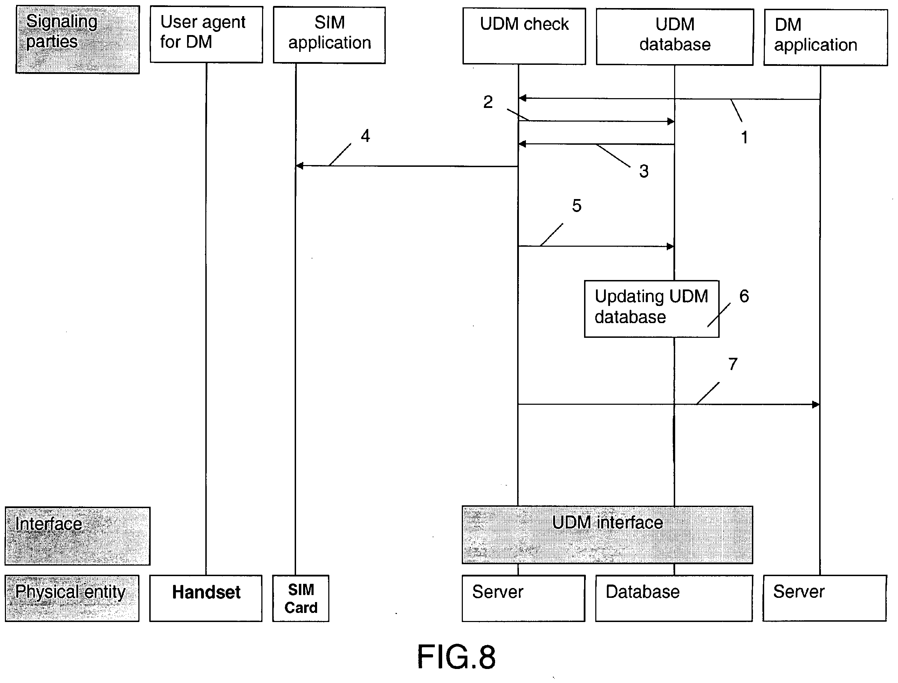

In figure 8, the pre-conditions are that the device does not exist in the UDM database, its realtime status is offline and its device status in the UDM database is online.

In the embodiment of figure 8, steps 1 - 3 are in accordance with steps 1 - 3 of figure 6.

Now the UDM check initiates a real-time OTA query in signal 4 to the SIM application on the device to check if it is online in the mobile network. The device is addressed with the MSISDN.

The device can, however, not be reached and connection for reading IMEI can not be established. The subscription is not online at this point of time. It is therefore assumed to be offline.

As the UDM check application now has determined on basis of the fact that no response was received for signal 4 that the device is "offine", it requests updating of the UDM database in signal 5 and the new device status ("offline") is recorded in step 6.

The UDM check application then responds with signal 7 to the query of signal 1 from the DM application (corresponds to signal 12 of figure 4) by informing that the device exist in the UDM database, that the device is offline and that the device status has been changed from online to offline and that the device has been in opposite status since the recorded "delta-value".

The server side DM application can thus not start a device management session with the intended device.

In figure 8, the post-conditions are thus that the device exists in the UDM database, its realtime status is offline and its device status in the UDM database is offline.

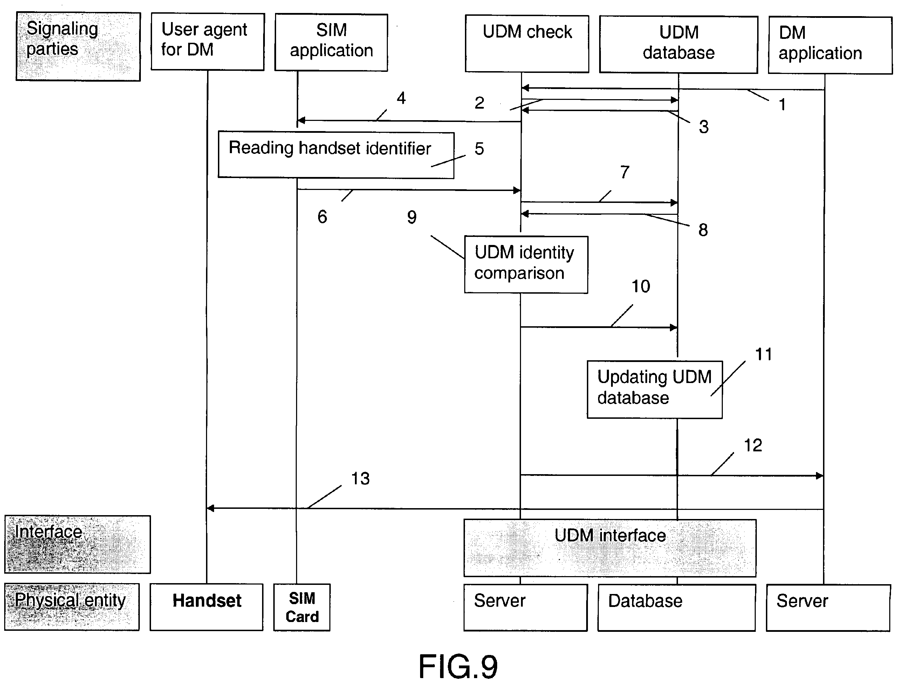

In figure 9, it is assumed that there is an existing device with the changed status from online to offline but that an other device is found to be online instead.

Then the preconditions are that the first device, D1,does not exist in the UDM database, its realtime status is offline and its device status in the UDM database is online. The second device, D2, also exists in the UDM database, its realtime status is online and its device status in the UDM database is offline.

Steps 1 - 9 of the embodiment of figure 9 are the same as in figure 4.

However, in this embodiment, the comparison in step 9 between the previously stored fetched handset identity for the particular subscription entity and the reported handset identity received with said signal 6 shows that they are not identical with each other.

Therefore, the UDM check application considers device D1 to be offline, even if the status reported in signal 6 showed the status to be online.

The UDM check calculates the time (referred to as the "delta value") since device D1 was first recorded to be in the opposite status and checks if the IMEI reported in signal 6, i.e. device D2, is recorded in the UDM database. This step can be performed in connection with step 9 or after steps 10 and 11.

D2 is recorded in the UDM database and has the status "offline".

The UDM check then requests updating of the UDM database in signal 10 and the new device status for D1, i.e. offline, and in this connection or in a separate step also the new status for D2, i.e. "online", are recorded in step 11.

The UDM check then calculates the time (referred to as "delta-value" since device D2 was first recorded to be in opposite status.

Finally the UDM check application responds with signal 12 to the query of signal 1 from the DM application (corresponds to signal 12 of figure 4) by informing that device D1 exists in the UDM database, that the device status has been changed from online to offline and by informing the time since last record of opposite status. It is also informed that device D2 has been found to be online for this subscription and that D2 exists in the UDM database, that the device status of D2 has been changed from offline to online and that device D2 has been in opposite status since "delta-value".

Signal 13 (which corresponds to signal 9 of figure 3) intends to show that the server side DM application now can start a device management session with device D2.

In figure 9, the post-conditions are thus that device D1 exists in the UDM database, its real-time status is offline and its device status in the UDM database is offline and that device D2 also exists in the UDM database, its real-time status is online and its device status in the UDM database is online.

## Claims

1. Method for checking the identity of devices in a device management system in a mobile telecommunication network, the system comprising devices to be managed, a server side device management application (10), a client side device management application (8), an interface (12) between said device management applications, and a database (13) connected to said interface (12),
**characterized in that** information of devices in the mobile communication network is recorded in the database (13) by means of a check application (11) in the interface (12) by means of the following steps in an optional order,
a) initiating a device management session via said interface (12),
b) said client side device management application (8) reading equipment information,
c) said client side device management application (8) sending the read equipment information to the interface (12),
d) the interface (12) comparing existing database information with received information and updating missing equipment information received in the database (13),
e) the interface (12) sends the equipment information situation as updated in the database (13) to the server side device management application (10).

2. Method of claim 1, **characterized in that** the device management session is initiated in step a) by the server side device management application (10).

3. Method of claim 2, **characterized in that** the interface (12) gets the equipment information from the client side device management application (8) in step c) as a response to a query sent after step a) but before step b) by the interface (12) to the client side device management application (8).

4. Method of claim 1, **characterized in that** the device management session is initiated in step a) by the device to be managed.

5. Method of claim 4, **characterized in that** client side device management application (8) reads the equipment information in step b) before step a).

6. Method of claim 5, **characterized in that** the interface (12) gets the equipment information from the client side device management application (8) in step a), whereby steps a) and c) are combined.

7. Method of any of claims 1 - 6, **characterized in that** after step a), the interface (12) check whether the device to be managed exist in the database (13).

8. Method of any of claims 1 - 6, **characterized in that** if device to be managed is previously stored in the database (13), the equipment information sent to the interface (12) is compared to the previously stored equipment information for the subscription from which the equipment information was sent by means of subscription information for said subscription and said comparison result is reported to the server side device management application (10).

9. Method of any of claims 7 or 8, **characterized in that** the equipment information situation reported in step d) consists of current database information and information of the changes with which the database (13) is updated.

10. Method of any of claims 1 - 9, **characterized in that** the mobile network is the Global System for Mobile Communication (GSM).

11. Method of any of claims 1 - 10, **characterized in that** the server side device management system (9) is a SyncML DM device management system.

12. Method of any of claims 1 - 11, **characterized in that** said equipment information sent in step c) is the International Mobile Equipment Identity (IMEI).

13. Method of any of claims 1 - 12, **characterized in that** in addition to equipment information, there is also sent status information of the device to be managed, the status information telling whether the device to be managed is online or offline.

14. Method of any of claims 1 - 13, **characterized in that** said subscription information mentioned in step d) is the Mobile Subscriber Identity (IMSI), The Mobile Station Integrated Service Digital Network Number (MSISDN) or the Integrated Circuit Card Identity (ICCID).

15. Method of any of claims 1 - 14 , **characterized in that** step d) is performed by means of a device identity comprising an equipment information identifier and a subscription information identifier.

16. Method of claim 15, **characterized in that** step d) is performed by checking said device identity in a database (13) connected to said interface (12).

17. Method of claim 13 **characterized in that** said database (13) is updated with new equipment information if on the basis of the comparison in step d) the previously stored equipment information was changed.

18. Method of claim 17 **characterized in that** previously stored status information is checked by the interface (12) in a database (13) upon receiving status information from the device to be managed.

19. Method of claim 18 **characterized in that** upon checking previously stored status information, it is determined whether there has been a device status change, and if so, the time since the last recorded status change is calculated.

20. Method of claim 19 **characterized in that** said database (13) is updated with new status information if the new status information differs from the previously stored status information.

21. Method of any of claims 1 - 20, **characterized by** the further step e) of starting said device management session mentioned in step d) between the client side and the server side.

22. Method of any of claims 1 - 21, **characterize** in that said device management session of step e) is carried out over the SyncML DM protocol.

23. Device management system in a mobile telecommunication network for providing checking identity of devices, devices to be managed, the system comprising a server side device management application (10), a client side device management application (8) and databases (13),
**characterized by**
a) a component (8) on the client side for reading the equipment identity,
b) an interface (12) for checking identity of devices from a device identity repository (13), for comparing existing database information with received information and updating missing equipment information received in the database (13), and
c) a database (13) implementing a device identity repository.

24. System of claim 23, **characterized in that** the device to be managed is a GSM phone, whereby component a) is an application (8) on the SIM card of the GSM phone.

25. System of claim 23 or 24, **characterized in that** component c) is a database (13) that stores the device identity, comprising an equipment identifier and a subscription identifier.

26. System of any of claims 23 - 25, **characterized in that** component c) is a database (13) that stores the device identity comprising the
a) the equipment identifier being the IMEI, and
b) the subscription identifier being the mobile destination address, such as the MSISDN, a subscription identifier being the IMSI and/or the SIM card identity being the ICCID.

27. System of claim 25 or 26, **characterized in that** component c) is a database (13) that stores status information of the device to be managed.

28. System of claim 25 or 26, **characterized in that** component c) is a database (13) that stores information about when changes have taken place.

29. System of any of claims 23 - 28 **characterized in that** component b) is device identity check application (11).

30. System of any of claims 23 - 29, **characterized in that** component b) is status check application (11).

## Patentansprüche

1. Verfahren zum Überprüfen der Identität von Geräten in einem Geräteverwaltungssystem in einem mobilen Telekommunikationsnetzwerk, wobei das System zu verwaltende Geräte, eine serverseitige Geräteverwaltungsanwendung (10), eine clientseitige Geräteverwaltungsanwendung (8), eine Schnittstelle (12) zwischen den Geräteverwaltungsanwendungen und eine mit der Schnittstelle (12) verbundene Datenbank (13) umfasst,
**dadurch gekennzeichnet, dass**
Informationen von Geräten im mobilen Kommunikationsnetzwerk mittels einer Überprüfungsanwendung (11) in der Schnittstelle (12) in der Datenbank (13) mittels folgender Schritte in einer optionalen Reihenfolge erfasst werden,
a) Einleiten einer Geräteverwaltungssitzung über die Schnittstelle (12),
b) die clientseitige Geräteverwaltungsanwendung (8) zum Lesen von Vorrichtungsinformationen,
c) die clientseitige Geräteverwaltungsanwendung (8) zum Senden der gelesenen Vorrichtungsinformationen an die Schnittstelle (12),
d) die Schnittstelle (12) zum Vergleichen vorhandener Datenbankinformationen mit empfangenen Informationen und zum Aktualisieren fehlender in der Datenbank (13) empfangener Vorrichtungsinformationen,
e) die Schnittstelle (12) sendet die in der Datenbank (13) aktualisierte Vorrichtungsinformationssituation an die serverseitige Geräteverwaltungsanwendung (10).

2. Verfahren nach Anspruch 1, **dadurch gekennzeichnet, dass** die Geräteverwaltungssitzung in Schritt a) durch die serverseitige Geräteverwaltungsanwendung (10) eingeleitet wird.

3. Verfahren nach Anspruch 2, **dadurch gekennzeichnet, dass** die Schnittstelle (12) die Vorrichtungsinformationen von der kundenseitigen Geräteverwaltungsanwendung (8) in Schritt c) als Antwort auf eine nach Schritt a), aber vor Schritt b) durch die Schnittstelle (12) zur kundenseitigen Geräteverwaltungsanwendung (8) gesendete Anfrage erhält.

4. Verfahren nach Anspruch 1, **dadurch gekennzeichnet, dass** die Geräteverwaltungssitzung in Schritt a) durch das zu verwaltende Gerät eingeleitet wird.

5. Verfahren nach Anspruch 4, **dadurch gekennzeichnet, dass** die clientseitige Geräteverwaltungsanwendung (8) die Vorrichtungsinformationen in Schritt b) vor Schritt a) liest.

6. Verfahren nach Anspruch 5, **dadurch gekennzeichnet, dass** die Schnittstelle (12) die Vorrichtungsinformationen von der kundenseitigen Geräteverwaltungsanwendung (8) in Schritt a) erhält, wobei die Schritte a) und c) kombiniert werden.

7. Verfahren nach einem der Ansprüche 1 - 6, **dadurch gekennzeichnet, dass** die Schnittstelle (12) nach Schritt a) prüft, ob das zu verwaltende Gerät in der Datenbank (13) vorhanden ist.

8. Verfahren nach einem der Ansprüche 1 - 6, **dadurch gekennzeichnet, dass**, wenn das zu verwaltende Gerät zuvor in der Datenbank (13) gespeichert ist, die an die Schnittstelle (12) gesendeten Vorrichtungsinformationen mit den zuvor gespeicherten Vorrichtungsinformationen für das Abonnement verglichen werden, von denen die Vorrichtungsinformationen mittels Abonnementinformationen für das Abonnement gesendet wurden, und das Vergleichsergebnis an die serverseitige Geräteverwaltungsanwendung (10) gemeldet wird.

9. Verfahren nach einem der Ansprüche 7 oder 8, **dadurch gekennzeichnet, dass** die in Schritt d) gemeldete Vorrichtungsinformationssituation aus aktuellen Datenbankinformationen und Informationen über die Änderungen besteht, mit denen die Datenbank (13) aktualisiert wird.

10. Verfahren nach einem der Ansprüche 1 - 9, **dadurch gekennzeichnet, dass** das mobile Netzwerk das Global System for Mobile Communication (GSM) ist.

11. Verfahren nach einem der Ansprüche 1 - 10, **dadurch gekennzeichnet, dass** das serverseitige Geräteverwaltungssystem (9) ein SyncML DM-Geräteverwaltungssystem ist.

12. Verfahren nach einem der Ansprüche 1 - 11, **dadurch gekennzeichnet, dass** die in Schritt c) gesendeten Vorrichtungsinformationen die International Mobile Equipment Identity (IMEI) ist.

13. Verfahren nach einem der Ansprüche 1 - 12, **dadurch gekennzeichnet, dass** zusätzlich zu den Vorrichtungsinformationen auch Statusinformationen des zu verwaltenden Geräts gesendet werden, wobei die Statusinformationen anzeigen, ob das zu verwaltende Gerät online oder offline ist.

14. Verfahren nach einem der Ansprüche 1 - 13, **dadurch gekennzeichnet, dass** die in Schritt d) genannten Abonnementinformationen die Mobile Subscriber Identity (IMSI), die Mobile Station Integrated Service Digital Network Number (MSISDN) oder die Integrated Circuit Card Identity (ICCID) sind.

15. Verfahren nach einem der Ansprüche 1 - 14, **dadurch gekennzeichnet, dass** Schritt d) mittels einer Gerätekennung durchgeführt wird, die eine Vorrichtungsinformationskennung und eine Abonnementinformationskennung umfasst.

16. Verfahren nach Anspruch 15, **dadurch gekennzeichnet, dass** Schritt d) durch Überprüfen der Geräteidentität in einer mit der Schnittstelle (12) verbundenen Datenbank (13) durchgeführt wird.

17. Verfahren nach Anspruch 13, **dadurch gekennzeichnet, dass** die Datenbank (13) mit neuen Vorrichtungsinformationen aktualisiert wird, wenn auf der Grundlage des Vergleichs in Schritt d) die zuvor gespeicherten Vorrichtungsinformationen geändert wurden.

18. Verfahren nach Anspruch 17, **dadurch gekennzeichnet, dass** zuvor gespeicherte Statusinformationen durch die Schnittstelle (12) in einer Datenbank (13) beim Empfangen von Statusinformationen von dem zu verwaltenden Gerät überprüft werden.

19. Verfahren nach Anspruch 18, **dadurch gekennzeichnet, dass** beim Überprüfen zuvor gespeicherter Statusinformationen bestimmt wird, ob eine Änderung des Gerätestatus stattgefunden hat, und wenn ja, die Zeit seit der letzten aufgezeichneten Statusänderung berechnet wird.

20. Verfahren nach Anspruch 19, **dadurch gekennzeichnet, dass** die Datenbank (13) mit neuer Statusinformation aktualisiert wird, wenn die neue Statusinformation von der zuvor gespeicherten Statusinformation abweicht.

21. Verfahren nach einem der Ansprüche 1 - 20, **gekennzeichnet durch** den weiteren Schritt e) zum Starten der in Schritt d) genannten Geräteverwaltungssitzung zwischen der Client-Seite und der Server-Seite.

22. Verfahren nach einem der Ansprüche 1 - 21, **dadurch gekennzeichnet, dass** die Geräteverwaltungssitzung von Schritt e) über das SyncML DM Protokoll durchgeführt wird.

23. Geräteverwaltungssystem in einem mobilen Telekommunikationsnetzwerk zum Bereitstellen der Überprüfung der Identität von Geräten, zu verwaltenden Geräten, wobei das System eine serverseitige Geräteverwaltungsanwendung (10), eine clientseitige Geräteverwaltungsanwendung (8) und Datenbanken (13) umfasst,
**gekennzeichnet durch**
a) eine Komponente (8) auf der Client-Seite zum Lesen der Geräteidentität,
b) eine Schnittstelle (12) zum Überprüfen der Identität von Geräten aus einem Geräteidentitäts-Datenspeicher (13), zum Vergleichen vorhandener Datenbankinformationen mit empfangenen Informationen und zum Aktualisieren fehlender in der Datenbank (13) empfangener Vorrichtungsinformationen, und
c) eine Datenbank (13), die einen Geräteidentitäts-Datenspeicher implementiert.

24. System nach Anspruch 23, **dadurch gekennzeichnet, dass** das zu verwaltende Gerät ein GSM-Telefon ist, wobei Komponente a) eine Anwendung (8) auf der SIM-Karte des GSM-Telefons ist.

25. System nach den Ansprüchen 23 oder 24, **dadurch gekennzeichnet, dass** die Komponente c) eine Datenbank (13) ist, die die Geräteidentität speichert, umfassend eine Gerätekennung und eine Abonnementkennung.

26. System nach einem der Ansprüche 23 - 25, **dadurch gekennzeichnet, dass** die Komponente c) eine Datenbank (13) ist, die die Geräteidentität speichert, die
a) die Gerätekennung, die die IMEI ist, und
b) die Abonnementkennung, die die mobile Zieladresse, wie die MSISDN, ist, eine Abonnementkennung, die die IMSI ist, und/oder die SIM-Kartenidentität, die die ICCID ist.

27. System nach Anspruch 25 oder 26, **dadurch gekennzeichnet, dass** die Komponente c) eine Datenbank (13) ist, die Statusinformationen des zu verwaltenden Geräts speichert.

28. System nach Anspruch 25 oder 26, **dadurch gekennzeichnet, dass** die Komponente c) eine Datenbank (13) ist, die Informationen darüber speichert, wann Änderungen stattgefunden haben.

29. System nach einem der Ansprüche 23 - 28, **dadurch gekennzeichnet, dass** die Komponente b) eine Anwendung (11) zur Überprüfung der Geräteidentität ist.

30. System nach einem der Ansprüche 23 - 29, **dadurch gekennzeichnet, dass** die Komponente b) eine Statusüberprüfungsanwendung (11) ist.

## Revendications

1. Procédé de vérification de l'identité du dispositif dans un système de gestion de dispositif dans un réseau de télécommunication mobile, le système comprenant des dispositifs devant être gérés, une application de gestion de dispositif côté serveur (10), une application de gestion de dispositif côté client (8), une interface (12) située entre lesdites applications de gestion de dispositif et une base de données (13) reliée à ladite interface (12),
**caractérisé en ce que** les informations de dispositif dans le réseau de communication mobile sont enregistrées dans la base de données (13) au moyen d'une application de vérification (11) située dans l'interface (12) au moyen des étapes suivantes dans un ordre facultatif,
a) le commencement d'une session de gestion de dispositif par l'intermédiaire de ladite interface (12),
b) ladite application de gestion de dispositif côté client (8) lisant des informations d'équipement,
c) ladite application de gestion de dispositif côté client (8) en voyant les informations d'équipement lues à l'interface (12),
d) l'interface (12) comparant des informations de base de données existantes avec des informations reçues et actualisant les informations d'équipement manquantes reçues dans la base de données (13),
e) l'interface (12) envoie la situation des informations d'équipement telle qu'actualisée dans la base de données (13) à l'application de gestion de dispositif côté serveur (10).

2. Procédé selon la revendication 1, **caractérisé en ce que** la session de gestion de dispositif commence dans l'étape a) par l'application de gestion de dispositif côté serveur (10).

3. Procédé selon la revendication 2, **caractérisé en ce que** l'interface (12 parenthèse obtient les informations d'équipement provenant de l'application de gestion de dispositif côté client (8) dans l'étape c) en réponse à une requête envoyée après l'étape a) mais avant l'étape b) par l'interface (12) à l'application de gestion de dispositif côté client (8).

4. Procédé selon la revendication 1, **caractérisé en ce que** la session de gestion de dispositif commence dans l'étape a) par le dispositif devant être géré.

5. Procédé selon la revendication 4, **caractérisé en ce que** l'application de gestion de dispositif côté client (8) lit les informations d'équipement dans l'étape b) avant l'étape a).

6. Procédé selon la revendication 5, **caractérisé en ce que** l'interface (12) obtient les informations d'équipement de l'application de gestion de dispositif côté client (8) dans l'étape a), moyennant quoi les étapes a) et c) sont combinées.

7. Procédé l'une quelconque des revendications 1 à 6, **caractérisé en ce qu'**après l'étape a), l'interface (12) vérifie si le dispositif devant être géré existe dans la base de données (13).

8. Procédé selon l'une quelconque des revendications 1 à 6, **caractérisé en ce que** si le dispositif devant être géré et précédemment stocké dans la base de données (13), les informations d'équipement envoyées à l'interface (12) sont comparées avec les informations d'équipement précédemment stockées pour l'abonnement à partir duquel les informations d'équipement ont été envoyées au moyen d'informations d'abonnement pour ledit abonnement et ledit résultat de comparaison est rapporté à l'application de gestion de dispositif côté serveur (10).

9. Procédé selon l'une quelconque des revendications 7 ou 8, **caractérisé en ce que** la situation d'informations d'équipement rapportée dans l'étape d) est constituée d'informations de base de données actuelles et d'informations concernant les changements avec lesquels la base de données (13) est actualisée.

10. Procédé selon l'une quelconque des revendications 1 à 9, **caractérisé en ce que** le réseau de téléphonie mobile est le système mondial de communications mobiles (GSM).

11. Procédé selon l'une quelconque des revendications 1 à 10, **caractérisé en ce que** le système de gestion de dispositif côté serveur (9) est un système de gestion de dispositif SyncML DM.

12. Procédé selon l'une quelconque des revendications 1 à 11, **caractérisé en ce que** lesdites informations d'équipement envoyées dans l'étape c) correspondent à l'identité internationale d'équipement mobile (IMEI).

13. Procédé selon l'une quelconque des revendications 1 à 12, **caractérisé en ce qu'**en plus des informations d'équipement, il existe aussi des informations d'état envoyées du dispositif devant être géré, les informations d'état indiquant si le dispositif devant être géré est en ligne ou hors ligne.

14. Procédé selon l'une quelconque des revendications 1 à 13, **caractérisé en ce que** lesdites informations d'abonnement mentionnées dans l'étape d) correspondent à l'identité d'abonné mobile (IMSI), au numéro de réseau numérique à services intégrés de station mobile (MSISDN) ou à l'identité de carte de circuit intégré (ICCID).

15. Procédé selon l'une quelconque des revendications 1 à 14, **caractérisé en ce que** l'étape d) est réalisée au moyen d'une identité de dispositif comprenant un identifiant d'informations d'équipement et un identifiant d'informations d'abonnement.

16. Procédé selon la revendication 15, **caractérisé en ce que** l'étape d) est réalisée par la vérification de ladite identité de dispositif dans une base de données (13) reliée à ladite interface (12).

17. Procédé selon la revendication 13, **caractérisé en ce que** ladite base de données (13) est actualisée avec des nouvelles informations d'équipement si, en fonction de la comparaison dans l'étape d), les informations d'équipement précédemment stockées ont été changées.

18. Procédé selon la revendication 17, **caractérisé en ce que** les informations d'état précédemment stockées sont vérifiées par l'interface (12) dans une base de données (13) après réception des informations d'état provenant du dispositif devant être géré.

19. Procédé selon la revendication 18, **caractérisé en ce qu'**après vérification des informations d'état précédemment stockées, il est déterminé qu'il s'est oui ou non produit un changement d'état de dispositif, et le cas échéant, on calcule le temps depuis le dernier changement d'état enregistré.

20. Procédé selon la revendication 19, **caractérisé en ce que** ladite base de données (13) est actualisée avec des nouvelles informations d'état si les nouvelles informations d'état sont différentes des informations d'état précédemment stockées.

21. Procédé selon l'une quelconque des revendications 1 à 20, **caractérisé par** l'étape e) supplémentaire de démarrage de ladite session de gestion de dispositif mentionnée dans l'étape d) entre le côté client et le côté serveur.

22. Procédé selon l'une quelconque des revendications 1 à 21, **caractérisé en ce que** ladite session de gestion de dispositifs de l'étape e) est effectuée selon le protocole SyncML DM.

23. Système de gestion de dispositif dans un réseau de télécommunication mobile destiné à l'obtention d'une identité de vérification de dispositifs, de dispositifs devant être gérés, le système comprenant une application de gestion de dispositif côté serveur (10), une application de gestion de dispositif côté client (8) et des bases de données (13),
**caractérisé par**
a) un composant (8) sur le côté client destiné à la lecture de l'identité d'équipement,
b) une interface (12) destinée à la vérification d'identité de dispositif à partir d'un répertoire d'identité de dispositif (13), destiné à la comparaison d'informations de base de données existantes avec les informations reçues et à l'actualisation des informations d'équipement manquantes reçues dans la base de données (13) et
c) une base de données (13) mettant en oeuvre un répertoire d'identité de dispositif.

24. Système selon la revendication 23, **caractérisé en ce que** le dispositif devant être géré est un téléphone GSM, selon lequel le composant a) est une application (8) sur la carte SIM du téléphone GSM.

25. Système selon la revendication 23 ou la revendication 24, **caractérisé en ce que** le composant c) est une base de données (13) qui stocke l'identité de dispositif, comprenant un identifiant d'équipement et un identifiant d'abonnement.

26. Système selon l'une quelconque des revendications 23 à 25, **caractérisé en ce que** le composant c) est une base de données (13) qui stocke l'identité de dispositif comprenant
a) l'identifiant d'équipement étant l'IIEM et
b) l'identifiant d'abonnement étant l'adresse de destination mobile, telle que la MSISDN, un identifiant d'abonnement étant l'IMSI et/ou l'identité de carte SIM étant l'ICCID.

27. Système selon la revendication 25 ou 26, **caractérisé en ce que** le composant c) est une base de données (13) qui stocke des informations d'état du dispositif devant être géré.

28. Système selon la revendication 25 ou 26, **caractérisé en ce que** le composant c) est une base de données (13) qui stocke des informations indiquant lorsque des changements ont eu lieu.

29. Système selon l'une quelconque des revendications 23 à 28, **caractérisé en ce que** le composant b) est une application de vérification d'identité de dispositif (11).

30. Système selon l'une quelconque des revendications 23 à 29, **caractérisé en ce que** le composant b) est une application de vérification d'état (11).
